# EUROPEAN PATENT APPLICATION

(11) **EP 2 006 244 A1**
(43) Date of publication of application: **24.12.2008**
(21) Application number: 07110688.4
(22) Date of filing: 20.06.2007
(51) Int. Cl.: B67D 5/08, B67D 5/22, G01F 25/00

(54) **A fuel dispensing unit, and a method for dispensing fuel**

(71) Applicant: Dresser Wayne Aktiebolag, 200 61 Malmö (SE)
(72) Inventor: Larsson, Bengt I., 274 53 Skivarp (SE); Kristiansson, Per, 232 91 Arlöv (SE)
(74) Representative: Milanov, Nina Vendela Maria

(57) **Abstract**

A fuel dispensing unit (1) comprising a fuel line (3) for drawing fuel from a fuel reservoir (5) to the fuel tank (7) of a vehicle is presented. The fuel line (3) comprises a fuel meter (10) arranged to generate a signal (S) that represents a volume of fuel dispensed to the vehicle, and the fuel dispensing unit (1) is characterised by a control unit (11) configured to determine a) if the shape of the signal (S) corresponds with the shape of a reference signal (Sref) which indicates correct operation, and b) if the shape of the signal (S) deviates from the shape of the reference signal (Sref) which indicates incorrect operation. Also, a method for dispensing fuel is provided.

## Description

### Field of the Invention

The present invention relates to a fuel dispensing unit comprising a fuel line for drawing fuel from a fuel reservoir to the fuel tank of a vehicle, the fuel line comprising a fuel meter arranged to generate a signal that represents a volume of fuel dispensed to the vehicle. The present invention also relates to a method for dispensing fuel.

### Background Art

A fuel dispensing unit draws fuel from a fuel reservoir, generally arranged under ground, to the tank of a vehicle. Thus, the fuel dispensing unit comprises a fuel line which in one end is connected to the fuel reservoir under ground, and in the other end is connected to a joint to which a flexible petrol hose is connected. At the free end of the petrol hose, a dispensing nozzle is arranged.

Further, the fuel dispensing unit is equipped with certain components, e.g. a pump, a flow meter, a display, to be able to provide an adequate filling-up of a vehicle.

When filling up a vehicle, the pump draws fuel from the under ground fuel reservoir through the fuel line to the tank of the vehicle. The flow meter is arranged in the fuel line to continuously monitor the amount of dispensed fuel. In some fuel dispensing units, the flow meter comprises a rotational wheel equipped with permanent magnets. A certain flow through the flow meter corresponds to a specific rotational speed of the wheel, and a sensor arranged adjacent to the wheel is configured to register a presence of a magnet. When a magnet passes the sensor, a signal is generated. Thus, each signal corresponds to a predetermined volume.

A flow meter as described above holds several drawbacks, of which the most obvious is related to the simple way of manipulating the flow meter. For example, by increasing the number of magnets on the rotational wheel the number of signals for a given amount of fuel will increase. The rotational wheel may also be exchanged for another wheel with a larger number of magnets. As a result the owner of the fuel dispensing unit will be able to get money by fraud. On the other hand, a customer may deceive the owner of the fuel dispensing unit by removing one or more magnets from the wheel or exchanging the wheel for a wheel with fewer magnets. The customer will then only pay an amount corresponding to the fewer number of magnets, even though the amount of dispensed fuel is the same.

In other cases, the sensor may be displaced or the rotational wheel may be tilted. The overall signal registered by the sensor may then comprise deformed or missing signals, whereby the owner looses money.

Thus, there are several problems with achieving stable operation without the risk of manipulation or malfunction.

### Summary of the Invention

In view of the foregoing, it is an object of the present invention to provide a more stable fuel dispensing unit, without the risk of manipulation or malfunction.

This and other objects and advantages that will be apparent from the following description of the present invention are achieved according to a first aspect of the invention by a fuel dispensing unit comprising a fuel line for drawing fuel from a fuel reservoir to the fuel tank of a vehicle, the fuel line comprising a fuel meter arranged to generate a signal that represents a volume of fuel dispensed to the vehicle. The fuel dispensing unit is characterised by a control unit configured to determine a) if the shape of the signal corresponds with the shape of a reference signal which indicates correct operation, and b) if the shape of the signal deviates from the shape of the reference signal which indicates incorrect operation. This is advantageous in that malfunction of the fuel meter may be detected, and attempts of manipulating the fuel dispensing unit can be avoided.

The signal may comprise a pulse train, whereby the control unit can determine if each pulse, or a series of pulses corresponds with the reference signal. This is advantageous in that complex matching between the pulse train and the reference signal can be performed.

The signal may be a periodic signal, which is advantageous in that simple comparisons can be made between the signal and the reference signal.

Further, the shape of the signal may comprise at least one of the amplitude, period and frequency distribution of the signal.

Each pulse may correspond to a specific volume of fuel dispensed to the vehicle, which is advantageous in that it provides a simple construction of the fuel meter.

Each pulse may further correspond to a magnetic field generated by the fuel meter, which is advantageous in that common fuel meters can be used.

The above objective is provided according to a second aspect of the invention by a method for for dispensing fuel from a fuel dispensing unit. The method comprises the steps of drawing fuel from a fuel reservoir to the fuel tank of a vehicle via a fuel meter, and generating a signal by said fuel meter that represents a volume of fuel dispensed to the vehicle. The method is further characterised in that it comprises the steps of comparing the signal with a reference signal, and determining a) if the shape of the signal corresponds with the shape of the reference signal which indicates correct operation, and b) if the shape of the signal deviates from the shape of the reference signal which indicates incorrect operation.

The advantages of the first aspect of the invention are also applicable for this second aspect of the invention.

The step of comparing the signal with a reference signal may comprise comparing at least one of the amplitude, period and the frequency distribution of the signal with the corresponding quantity of the reference signal.

Other objectives, features and advantages of the present invention will appear from the following detailed disclosure, from the attached dependent claims as well as from the drawings.

### Brief Description of the Drawings

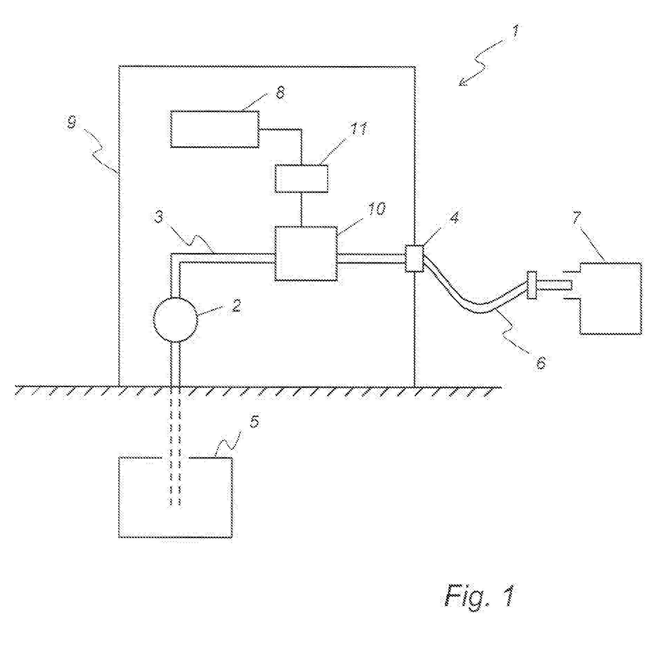

Embodiments of the present invention will now be described, by way of example, with reference to the accompanying schematic drawings, in which
- Fig. 1: is a cross-sectional view of a fuel dispensing unit according to the present invention.
- Fig. 2: shows the fuel meter and the control unit of the fuel dispensing unit according to the present invention.
- Fig. 3: shows one embodiment of a signal.
- Fig. 4: shows a second embodiment of a signal.
- Fig. 5: shows a third embodiment of a signal.
- Fig. 6: shows the frequency distribution of the signal shown in fig. 4.
- Fig. 7 -: 9 shows examples of signals generated by the fuel meter.

### Detailed Description of Preferred Embodiments

The fuel dispensing unit of the present invention is designated 1 in the accompanying drawing. The fuel dispensing unit 1 has a housing 9. Means for drawing fuel from a reservoir 5 to the tank of a vehicle 7 are arranged inside the housing 9. The reservoir 5 is positioned under ground, and a fuel line 3 is connected to the reservoir 5. The fuel line 3 transports fuel from the reservoir 5 to a fuel meter 10 by means of a fuel pump 2. The fuel line 3 further extends from the fuel meter 10 to a joint 4, to which a flexible hose 6 is connected. The flexible hose 6 is configured to be pulled out from the housing 9 in order to enable filling up the tank 7 of a vehicle. A control unit 11 is connected to the fuel meter and a display 8 is configured to show the amount of dispensed fuel.

During filling up, the fuel pump 2 draws fuel from the reservoir 5 to the tank 7 of the vehicle. The fuel meter 10 measures the amount of dispensed fuel during the filling up, and the control unit 11 converts the registered value to a corresponding volume. The display 8 shows the accumulated amount of dispensed fuel continuously during the filling up.

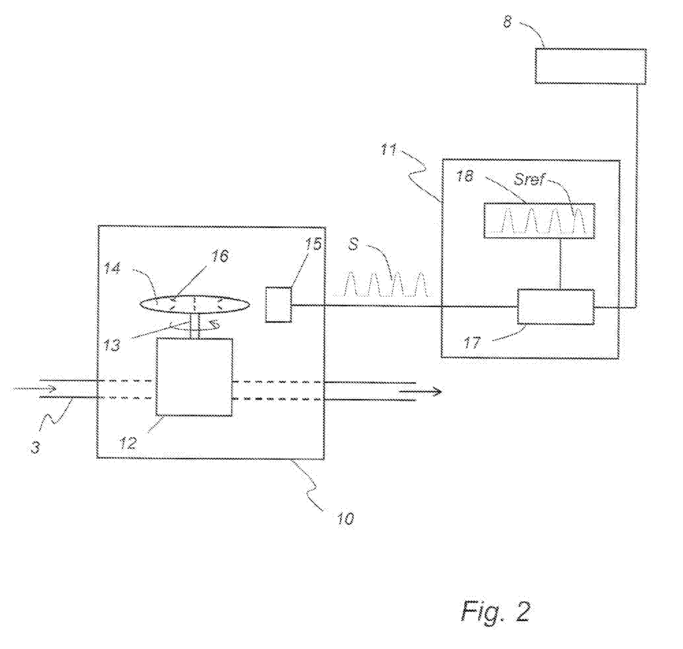

Fig. 2 shows the fuel meter 10 in more detail. Fuel is transported through the fuel line 3 during filling-up in the direction indicated by the arrows. The fuel meter 10 comprises a metering means 12 which is connected to a rotational shaft 13. Fuel passing through the fuel meter 10 forces the shaft 13 to rotate. A circular plate 14 is arranged at the end of the shaft 13 so that the plate 14 is rotating when the shaft 13 is rotating. The circular plate 14 is equipped with a plurality of magnets 16 positioned at the periphery of the plate 14. The magnets 16 may either be attached to the plate 14 or incorporated in the plate material. In one embodiment, the plate has 26 magnets 16, i.e. 52 magnetic poles attached to the plate14, and the rotating speed of the plate 14 is approximately 100 rounds per minute. In another embodiment, six magnetic poles 16 are incorporated in the circular plate 14 which has a rotational speed of 1100 rounds per minute. The magnets 16 are rotating when the plate 14 is rotating. A sensor 15 is arranged adjacent to the plate 14. The sensor 15 is configured to detect the presence of a magnetic field, and deliver a sensing pulse upon registration of such magnetic field. The sensor may e.g. be a so called Hall effect sensor, or any other magnetic sensor known per se.

When the plate 14 is rotating, one revolution of the plate 14 corresponds to a specific amount of dispensed fuel. Thus, every pulse generated by the sensor 15 corresponds to a certain amount of dispensed fuel. If one revolution of the plate 14, having six magnetic poles, corresponds to 1 ml, one pulse generated by the sensor 15 due to the presence of a magnetic field generated by one magnetic pole corresponds to 0,17 ml of dispensed fuel.

During filling-up, the plate 14 is rotating continuously whereby the sensor 15 registers a number of pulses. These pulses are forming a signal S which is transferred to the control unit 11.

The control unit has a comparator, such as a processor, which is configured to compare the generated signal S with a reference signal Sref. The reference signal Sref is stored in a memory 18. The reference signal Sref may e.g. have the form of a curve, a number of reference values together generating a curve, or a mathematical formula generating a curve.

In an embodiment the reference signal Sref may be generated by the fuel meter 10. The fuel meter 10 generates a signal S which is divided into several portions S'. Preferably, each portion S' corresponds to one period of the signal S. Each portion S' may also correspond to one half of the period of the signal S. A first portion S' is considered as the reference signal Sref' and stored in the memory 18. A second portion S' is then compared to the reference signal Sref' (i.e. the first signal portion). A third portion, a fourth portion etc. are also compared to the reference signal Sref'. If the shape of any of the portions S' deviates from the shape of Sref (with regards to the amplitude, the length of the portion etc), the fuel meter is considered to malfunction. The memory 18 can be incorporated in the control unit 11, or it can be arranged remotely on a server, or similar.

The generated signal S may also indicate if the fuel meter measures a constant flow. The fuel meter 10 may generate a signal S corresponding to one revolution of the plate 14. The signal S is considered as the reference signal Sref and stored in the memory 18. The fuel meter 10 generates a second signal S corresponding to a second revolution of the plate 14, and the control unit 11 determines if the shape of the signal S corresponds to the shape of the reference signal Sref. If e.g. the length of the signal S deviates from the length of the reference signal Sref, the flow is not considered to be constant.

The signal S can be either analogue or digital. The control unit 11 can comprise further electronic equipment to simplify the comparing, e.g. A/D converters, D/A converters, low pass filters, high pass filters etc.

When the signal S is generated from the sensor 15, the signal S is transmitted to the comparator 17 of the control unit 11. The comparator requests the reference signal Sref from the memory 18 and the signal S is compared to the reference signal Sref. A correct operation of the fuel meter is indicated by the signal S corresponding to the reference signal Sref. The metered volume of dispensed fuel is then transferred to the display 8. An incorrect operation of the fuel meter is indicated by the signal S deviating from the reference signal Sref. An error message is then delivered to the operator, to the owner of the fuel dispensing unit, to a log file or the like.

The reference signal Sref can be one part of a set of reference signals stored in the memory 18. As described above, each pulse of the signal S corresponds to a specific volume of dispensed fuel. However, the fuel dispensing rate may vary for example as a function of the fuel pump speed and/or the number of filling-ups performed at the same time using the same fuel pump. Therefore, the rotational speed of the plate 14 may not be constant for two different filling-ups, or not even during one single filling-up. Therefore, the control unit receives information about e.g. the actual fuel pump speed and number of filling-ups performed at the same time using the same fuel pump. Based on these values, the correct reference signal Sref can be requested from the memory 18 and an adequate comparison can be performed by the comparator 17.

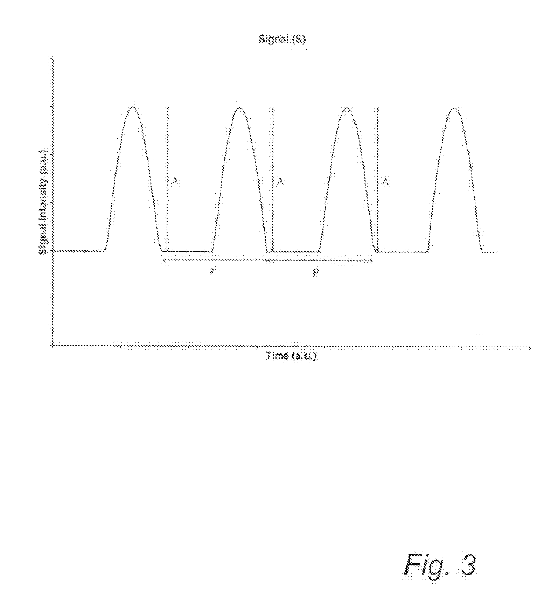

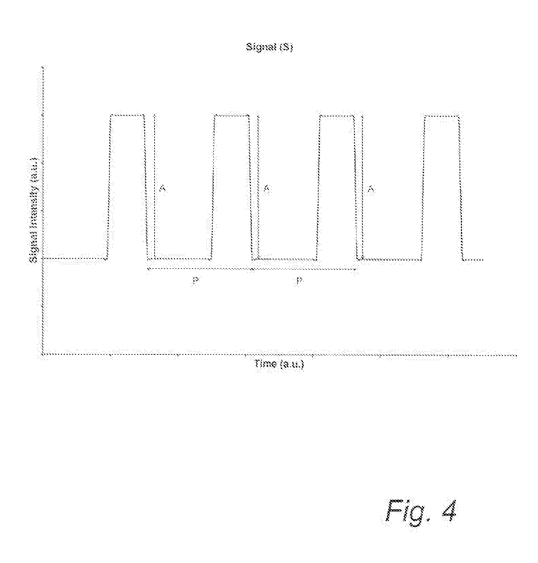

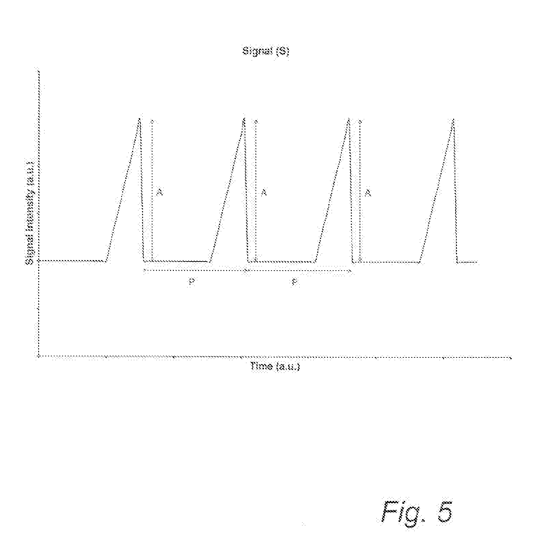

Fig. 3 - 5 shows examples of signals S generated by the sensor 15. Fig. 3 shows sine-shaped pulses forming a signal S having the amplitude A and period P. In fig. 4, the pulses are square-shaped. The signal S has the amplitude A and period P. In fig 5, the signal S comprises saw tooth shaped pulses. The signal S has the amplitude A and period P. The shape of the signal S can be compared to the shape of the signal Sref with respect to amplitude, period and frequency distribution.

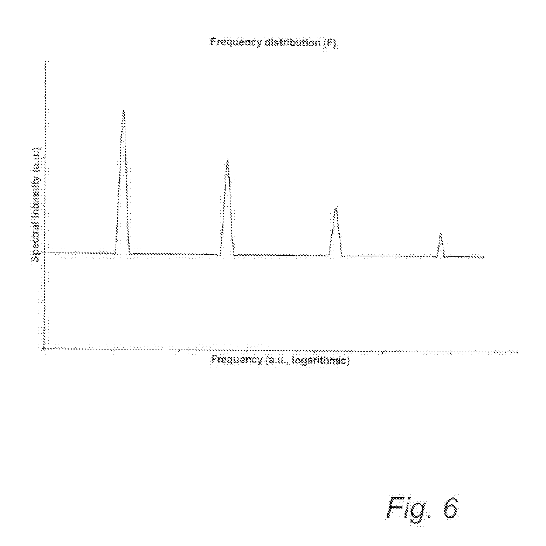

Fig. 6 shows the frequency distribution F of the square shaped pulses of the signal S as shown in fig. 4. In fig. 6, the signal S as shown in fig. 4 is transformed from the time domain to the frequency domain. According to standard Fourier transform operations, a signal of square shaped pulses S is a sum of the fundamental frequency of the signal S (i.e. the period) and the odd harmonics. The peaks shown in fig. 6 corresponds to the fundamental frequency (the leftmost peak) and the first, third and fifth harmonic. The frequency distribution F of a signal S comprising saw tooth shaped pulses (as shown in fig. 5) is a sum of the fundamental frequency of the signal S (i.e. the period) and the even and odd harmonics. A pure sine-shaped signal corresponds to only the fundamental frequency. Thus, the frequency distribution F holds information about the shape of the signal, e.g. square, saw tooth, triangular etc.

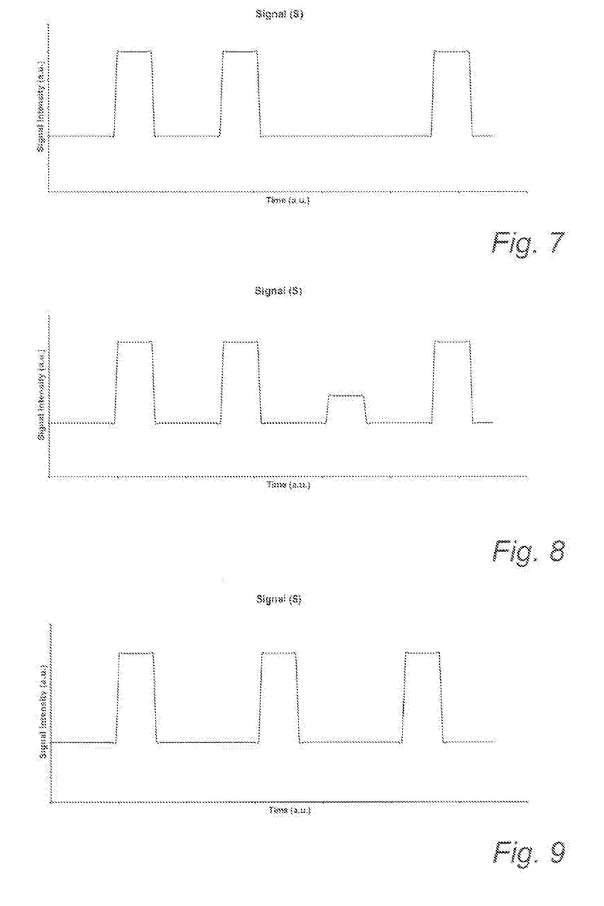

Fig. 7 - 9 shows examples of registered signals S by the sensor 15. In fig. 7, a pulse is missing. This can be caused by the removal of one magnet 16, either by purpose or by accident. In fig. 8, the amplitude A of one pulse is decreased. This can occur e.g. if a weaker magnet 16 is used, or if the plate 14 is positioned off-centre. In fig. 9 a signal S is shown, of which the period P is greater. This can be caused by a lower fuel delivery rate.

The fuel meter can be of any known type suitable for metering fuel. Further, the plate 14 is not necessarily equipped with magnets 16 but with e.g. light reflective means. The sensor 15 is correspondingly a photo circuit for sensing light reflections.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A fuel dispensing unit (1) comprising a fuel line (3) for drawing fuel from a fuel reservoir (5) to the fuel tank (7) of a vehicle, the fuel line (3) comprising a fuel meter (10) arranged to generate a signal (S) that represents a volume of fuel dispensed to the vehicle,
**characterised by** a control unit (11) configured to determine a) if the shape of the signal (S) corresponds with the shape of a reference signal (Sref) which indicates correct operation, and b) if the shape of the signal (S) deviates from the shape of the reference signal (Sref) which indicates incorrect operation.

2. A fuel dispensing unit according to claim 1, wherein the signal (S) comprises a pulse train.

3. A fuel dispensing unit according to any of claim 1 or 2, wherein the signal (S) comprises a periodic signal.

4. A fuel dispensing unit according to any one of the preceding claims, wherein the shape of the signal (S) comprises the amplitude (A) of the signal (S).

5. A fuel dispensing unit according to any one of the preceding claims, wherein the shape of the signal (S) comprises the period (P) of the signal (S).

6. A fuel dispensing unit according to any one of the preceding claims, wherein the shape of the signal (S) comprises the frequency distribution (F) of the signal (S).

7. A fuel dispensing unit according to any of claim 2 - 6, wherein each pulse corresponds to a specific volume of fuel dispensed to the vehicle.

8. A fuel dispensing unit according to any of claim 2 - 7, wherein each pulse corresponds to a magnetic field generated by the fuel meter (10).

9. A method for dispensing fuel from a fuel dispensing unit comprising the steps of
drawing fuel from a fuel reservoir to the fuel tank of a vehicle via a fuel meter,
generating a signal (S) by said fuel meter that represents a volume of fuel dispensed to the vehicle,
**characterised in that** the method further comprises the steps of
comparing the signal with a reference signal (Sref), and
determining a) if the shape of the signal (S) corresponds with the shape of the reference signal (Sref) which indicates correct operation, and b) if the shape of the signal (S) deviates from the shape of the reference signal (Sref) which indicates incorrect operation.

10. A method according to claim 9, wherein the step of comparing the signal with a reference signal comprises comparing the amplitude of the signal with the amplitude of the reference signal.

11. A method according to any one of claims 9 or 10, wherein the step of comparing the signal with a reference signal comprises comparing the period of the signal with the period of the reference signal.

12. A method according to any one of claims 9 - 11, wherein the step of comparing the signal with a reference signal comprises comparing the frequency distribution of the signal with the frequency distribution of the reference signal.
